# EUROPEAN PATENT APPLICATION

(11) **EP 1 825 754 A2**
(43) Date of publication of application: **29.08.2007**
(21) Application number: 07003313.9
(22) Date of filing: 16.02.2007
(51) Int. Cl.: A01N 59/16, A01N 25/34, A01P 1/00

(54) **Disposable hygienic device for protecting the human skin against the spread of pathogenic micro-organisms**

(30) Priority: 24.02.2006 IT mo20060066
(71) Applicant: Marzia, Pignatti, 41042 Carpi MO (IT)
(72) Inventor: Marzia, Pignatti, 41042 Carpi MO (IT)
(74) Representative: Feltrinelli, Secondo Andrea

(57) **Abstract**

The disposable hygienic device for protecting the human skin against the spread of pathogenic micro-organisms comprises a protection element of at least one part of the human body featuring a surface able to come into contact with the human body and on which is distributed a dispersion of silver ions.

## Description

This invention refers to a disposable hygienic device for protecting the human skin against the spread of pathogenic micro-organisms.

It is known that on many occasions during our daily lives, the human body, especially the hands and feet, comes into direct contact with surfaces that are not very hygienic and on which, due to promiscuity and environmental characteristics, colonies of micro-organisms can proliferate with high risk of picking up infections of bacterial type and above all of mycotic type.

In this respect, think of premises such as gym changing rooms, swimming pools, laboratories, clinics, clothes shops or the like, inside which people, who have taken off their clothes, can easily come into contact with germs or microbes, especially off the floor and/or surfaces on which clothes are placed.

In all premises where sports activities are practised, also frequent is the spread of liquids produced by body evaporation; if equipment and/or machines are used to exercise muscles, the human body grip and/or supporting surfaces usually end up coming into contact with the skin of different users and, in some cases, can act as conveyors of pathogenic bacteria from one person to another.

Similar situations can arise in clinics, beauty salons and/or tanning booths, on trains and planes, in relation to the use of couches and armchairs used by different people in succession.

To restrict the spread of pathogenic bacteria, in all the above-mentioned cases, the use is known of special systems that act as physical barriers between the human body and the surfaces infested with microbes.

Such systems usually consist of plastic and/or sponge mats, towels, sheets of paper, or the like, which are placed between users and the surface they come into contact with.

These systems do however present a number of drawbacks.

It must be remembered in fact that traditional-type physical barriers placed between the human body and bacteria do not represent a definitive solution to the spread of microbes, but only a temporary obstacle to their diffusion.

By means of systems of known type, in practice, the pathogenic bacteria on a floor or surface, instead of infecting and/or attacking the human body, transfer onto the mat/towel/sheet of paper with which this comes into contact and which, therefore, becomes in itself a possible vehicle for the spread of bacteria until it is sanitized or eliminated as waste.

The main aim of this invention is to devise a disposable hygienic device for protecting the human skin against the spread of pathogenic micro-organisms, which is particularly suitable for the prevention of mycosis and bacterial infections, permitting not only to keep bacteria away from the human body, but also to actively intervene to contrast spreading.

These purposes are all achieved by this disposable hygienic device for protecting the human skin against the spread of pathogenic micro-organisms, characterized in that it comprises a protection element of at least one part of the human body featuring at least one surface able to come into contact with said part of the human body and on which is distributed a dispersion of silver ions.

Further characteristics and advantages of this invention will become more evident from the detailed description of a preferred but not exclusive form of embodiment, of a disposable hygienic device for protecting the human skin against the spread of pathogenic micro-organisms.

Such device consists of an element for protecting a part of the human body that features at least one surface able to come into contact with the human body and on which is present a dispersion of silver ions with positive ionic structure.

To achieve such dispersion protein silver in aqueous vehicle is used with a preferable concentration of 0.05%.

Protein silver with water forms a colloidal dispersion that is deposited on the protection element.

The silver ions thus distributed on the protection element have humid activation, meaning that they activate in the presence of humidity.

During use, the humid activation of the silver ions occurs by means of contact between the protection element and the human skin, which expels humidity by body evaporation and sweating.

The silver ions have an anti-bacterial function.

The positive charges of the silver ions do in fact act catalytically, meaning they activate a chemical reaction without taking part in this directly, and form bonds of the electrostatic type with the negative charges located on the cellular membrane of any bacteria infesting the skin of the human body.

In such circumstances, the silver ions cause an alteration of the spreading processes through the cellular membrane of the bacteria, producing, in particular, the transfer of oxygen and the suffocation of the pathogenic organisms.

In point of fact, the device according to the invention is shaped according to the type of use to act as a barrier, not only physical but also chemical, to be used in any situation in which hands, feet or other parts of the body have to come into contact with surfaces that are not completely sanitized.

The protection element can consist, for example, of a mat made of a sheet of non-woven fabric of fairly heavy basis weight, if necessary mounted on a polymer material support (PVC), to be installed on the floor of gym changing-rooms, beauty salons, swimming pools, clinics or the like, and on which users can walk barefoot in total safety.

Alternatively, the element could be made of a sheet of non-woven fabric of lighter basis weight that can be used as towels, bed covers, wipes, table napkins, headrests in planes and trains, panty liners, foot-cover soles, toilet paper, toilet covers, or the like.

Other, alternative forms of embodiment of the protection element cannot however be ruled out, as in the case of this being shaped like a protective mask for the airways, or in the form of gloves, or the like.

It has in practice been seen how the described invention achieves the intended purposes.

In this respect, the fact is underlined that the particular solution of using a protective element featuring a portion covered with silver ions which can be activated in the presence of humidity, not only enables it to be used as a physical barrier against the spread of bacteria, but also to perform an anti-bacterial activity in contact with the human skin, particularly in the presence of Gram - micro-organisms (*Pseudomonas aeruginosa* and *Escherichia coli*), Gram + (*Staphylococcus aureus*) and Yeasts (*Candida albicans*).

The invention thus conceived is susceptible of numerous modifications and variations, all of which falling within the scope of the inventive concept.

Furthermore all the details may be replaced by other elements which are technically equivalent.

In practice, the materials used, as well as contingent shapes and dimensions may be any according to requirements without because of this moving outside the protection scope of the following claims.

## Claims

1. Disposable hygienic device for protecting the human skin against the spread of pathogenic micro-organisms; **characterized in that** it comprises a protection element of at least one part of the human body featuring at least one surface able to come into contact with said part of the human body and on which is distributed a dispersion of silver ions.

2. Device according to claim 1, **characterized in that** said silver ions are of the protein silver type in aqueous vehicle.

3. Device according to one or more of the preceding claims, **characterized in that** the concentration of said silver ions in said aqueous solution is substantially of 0.05%.

4. Device according to one or more of the preceding claims, **characterized in that** said silver ions have a positive ionic structure.

5. Device according to one or more of the preceding claims, **characterized in that** said silver ions have humid activation.

6. Device according to one or more of the preceding claims, **characterized in that** said protection element is made in non-woven fabric.

7. Device according to one or more of the preceding claims, **characterized in that** said protection element comprises a bottom in a substantially polymeric material to which is associated said non-woven fabric.

8. Device according to one or more of the preceding claims, **characterized in that** said protection element is made in the form of a sheet.

9. Device according to one or more of the preceding claims, **characterized in that** said protection element is made in the form of a mat.

10. Device according to one or more of the preceding claims, **characterized in that** said protection element is made in the form of a protective mask for the airways.

11. Device according to one or more of the preceding claims, **characterized in that** said protection element is made in the form of gloves.
